# EUROPÄISCHE PATENTSCHRIFT

(11) **EP 1 263 639 B1**
(45) Veröffentlichungstag und Bekanntmachung des Hinweises auf die Patenterteilung: **13.08.2003**
(21) Anmeldenummer: 01921726.4
(22) Anmeldetag: 16.03.2001
(51) Int. Cl.: B61C 15/10, B60B 39/06

(54) **STREUGERÄT**
GRITTING DEVICE
APPAREIL D'EPANDAGE

(30) Priorität: 17.03.2000 AT 4422000
(43) Veröffentlichungstag der Anmeldung: 11.12.2002
(73) Patentinhaber: Goldmann, Norbert, 31832 Springe (DE); Bartling, Luise, 31008 Elze (DE)
(72) Erfinder: BARTLING, Werner, 31008 Elze (DE)
(74) Vertreter: Köhler-Pavlik, Johann, Dipl.-Ing.
(86) Internationale Anmeldenummer: IB0100671
(87) Internationale Veröffentlichungsnummer: WO01068431

(56) Entgegenhaltungen:
- EP-A- 0 149 417
- EP-A- 0 378 066
- WO-A-98/06591
- DE-A- 2 111 843

## Beschreibung

Die Erfindung betrifft ein Streugerät nach dem Oberbegriff des Anspruches 1.

Derartige Streugeräte sind zum Streuen von insbesondere granulatartigem Streugut, insbesondere trockenem Sand oder anderen Antirutschmaterialien vor die Räder von Fahrzeugen, wie z.B. Schienenfahrzeugen oder Lastkraftwagen, bestimmt.

Streugeräte dieser Art sind durch die EP-A-0 378 066 und EP-A-0 149 417 bekannt geworden.

Bei der Streuvorrichtung nach der EP-A-0 149 417 ist die Streuvorrichtung mit einem Streurad ausgestattet, welches abgewinkelte Schaufeln besitzt. Obwohl das Material dieser Schaufeln nicht näher beschrieben ist, war es bei derartigen Streuvorrichtungen üblich, die Flügel des Streurades aus Metall herzustellen, was den Nachteil hatte, dass Körner des Streugutes zwischen einem der Flügel und der ihn umgebenden Kanalwand eingeklemmt wurden, wodurch die Flügel Beschädigungen erleiden konnten.

Aus der AT 403 559 A ist ein Streugerät bekannt, welches mit Hilfe von der Förderung des Sandes getrennte Dosierung mittels einen axial verschiebbaren Kolbens aufweist. Nach der Dosierung wird das Streugut in einen als Injektor ausgeführte druckluftbetätigte Förder- bzw. Austragseinrichtung zum Austragen des Streugutes vorgesehen. Dies bringt den Vorteil mit sich, dass gegenüber Streugeräten, bei denen Dosierung des Streugutes nicht getrennt von dessen Förderung stattfindet, eine wesentlich geringere Menge an Streugut verbraucht wird. Jedoch liegt der Nachteil dieses Streugeräts darin, dass die dosierte Menge an Streugut, z.B. Sand, abhängig von der Sandqualität bzw. der Sandkörnung ist, da der Öffnungsspalt des Dosierkolbens unveränderlich festgelegt ist. Dadurch besteht die Gefahr, dass bei grober Sandkörnung ein zu kleiner Öffnungsspalt vorliegt, und somit die Öffnung des Dosierkolbens durch nicht durchtretende Sandkörner verlegt wird, wodurch sich eine unerwünschte Unterbrechung des Sandaustrags ergibt.

Die DE 30 42 413 A1 zeigt ein Streugerät für körniges Gut mit einem motorisch angetriebenen Rotor, welcher das Streugut in einen Auslauf schleudert. Der Rotor ist jedoch nicht als Dosiereinrichtung ausgestattet, vielmehr wird durch eine Bürstenwalze ein nicht dosiertes Aussprühen des Streugutes erzielt.

Ziel der Erfindung ist es nun, unter Vermeidung der Nachteile der bekannten Konstruktionen ein Streugerät zu schaffen, bei dem die Dosierung des Streugutes von der jeweiligen Qualität bzw. der Korngröße des vorliegenden Streugutes unabhängig ist und somit die Gefahr des Verlegens der Dosiervorrichtung verringert wird. Weiters soll die Dosierung stufenlos einstellbar sein.

Dieses Ziel wird bei einem erfindungsgemäßen Streugerät der eingangs angeführten Art durch die Maßnahme nach dem kennzeichnenden Teil des Anspruches 1 erreicht.

Zellenradschleusen sind üblicherweise Absperrorgane, die zur Trennung von pneumatischen Fördersystemen zu mechanischen Fördereinrichtungen dienen. Mit Hilfe des definierten Kammervolumens eines Zellenrades und einer regelbaren, freiwählbaren Drehzahl dieses Rades kann eine bestimmte Dosiermenge eingestellt werden.

Somit ist der Parament, der die Menge an dosiertem Streugut festlegt, die Drehzahl der rotierbaren Förder- bzw. Verschlussfläche. In Ruhestellung sperrt die Förder- bzw. Verschlussfläche somit die Verbindung zwischen dem Vorratsbehälter und der druckluftbeaufschlagten Förder- bzw. Austragsvorrichtung ab, bei Rotation hingegen nimmt sie abhängig von der Umlaufgeschwindigkeit eine entsprechende Dosiermenge Streugut auf, und fördert diese zur Förder- bzw. Austragsvorrichtung.

Wenn die das Zellenrad in mehrere Kammern unterteilenden und als Förder- bzw. Verschlussfläche dienenden Flügel aus flexiblem Material bestehen, können die Flügel bei Einschluss von Streugut zwischen den Flügeln und dem umliegenden Gehäuse nachgeben und somit wird vorteilhafterweise eine Beschädigung bzw. starker Verschleiß der Zellenradflügel vermieden.

Um eine flexible Förder- bzw. Verschlussfläche zu erhalten, ist es vorteilhaft, wenn die das Zellenrad in mehrere Kammern unterteilenden Flügel aus Bürsten bestehen.

Für eine einfache und billige Fertigung des Zellenrades und günstige Materialeigenschaften, besonders hinsichtlich der Flexibilität, ist es vorteilhaft, wenn das Zellenrad bzw. die Zellen aus Kunststoff oder Gummi besteht bzw. bestehen.

Für eine sehr hohe Lebensdauer des Zellenrades, bei der trotzdem die gewünschte Flexibilität vorhanden ist, ist es von Vorteil, wenn das Zellenrad aus Metall, vorzugsweise Blech, besteht.

Es besteht aber auch die Möglichkeit, das Zellenrad aus einem anderen Material, z.B. Kunststoff, Gummi od.dgl., auszuführen.

Um je nach Vorliegen unterschiedlicher Qualität des Streugutes eine optimale Dosierung zu erhalten, ist es günstig, wenn das Zellenrad austauschbar ist.

Wenn das Volumen der Zellenrad-Kammern veränderbar ist, besteht vorteilhafterweise eine weitere Möglichkeit, neben der Drehzahlregelung, die Dosierung des Streugutes einzustellen.

Um eine möglichst genaue Dosierung des auszutragenden Streugutes zu ermöglichen, ist es von Vorteil, wenn die Drehzahl der rotierbaren Dosiervorrichtung stufenlos veränderbar ist.

Wenn zur Steuerung der Drehzahl der zumindest einen Förder- bzw. Verschlussfläche eine Antriebseinheit vorgesehen ist, kann die Drehzahl vorteilhafter Weise unabhängig von den übrigen Parametern im Streugerät eingestellt werden.

Für einen konstruktiv einfachen Antrieb mit einer genauen Drehzahlregelung ist es günstig, wenn als Antriebseinheit ein Gleichstrommotor mit elektronischer Drehzahlregelung vorgesehen ist. Anstelle des Gleichstrommotors kann auch ein Hydro- oder Druckluftmotor oder ein anderer Motor verwendet werden. Die Drehzahlregelung könnte auch über einen Flüssigkeitsmengenregler bei einem Hydromotor oder über ein Druckluftventil bei einem Druckluftmotor erreicht werden.

Für eine zweckmäßige Drehzahlübertagung zwischen der Antriebseinheit und der Dosiervorrichtung, ist es von Vorteil, wenn zwischen der Antriebseinheit und der Dosiervorrichtung ein Untersetzungsgetriebe vorgesehen ist.

Wenn zwischen der druckluftbetätigten Förder- bzw. Austragsvorrichtung und einem für die Druckluftzufuhr vorgesehenen Kompressor ein Rückschlagventil vorgesehen ist, kann vorteilhafterweise eine Rückströmung von Luft in den Kompressor verhindert werden.

Das Rückschlagventil dient vorwiegend zum Schutz des Kompressors, besonders bei sogenannten Zweirichtungsfahrzeugen, bei denen aufgrund des möglichen Fahrtrichtungswechsels an beiden Seiten der Räder Streugeräte vorgesehen sind. Da sich bei Fortbewegen des Fahrzeugs in den Streugeräten die gerade unbeansprucht sind ein Staudruck in der Förderleitung ergibt, der sich im System in dynamischen Druck umsetzen kann und dadurch sich eine ungewollte entgegen der eigentlichen Förderichtung umgekehrte Luftströmung ergibt, die wiederum zur Folge hat, dass Feuchtigkeit und Sand in den Kompressor gelangen können. Dies kann wiederum zum Verklumpen und letztendlich zur Blockade des Streugeräts führen.

Die Erfindung wird nachstehend anhand von in der Zeichnung dargestellten bevorzugten Ausführungsbeispielen, auf die sie jedoch nicht beschränkt sein soll, noch weiter erläutert. Im Einzelnen zeigen in der Zeichnung:
Fig. 1 eine schematische Blockschaltbilddarstellung des Streugeräts; und
Fig. 2 eine Zellenradschleuse als die in Fig. 2 gezeigten Dosiervorrichtung mit einer Anstriebseinheit im Detail.

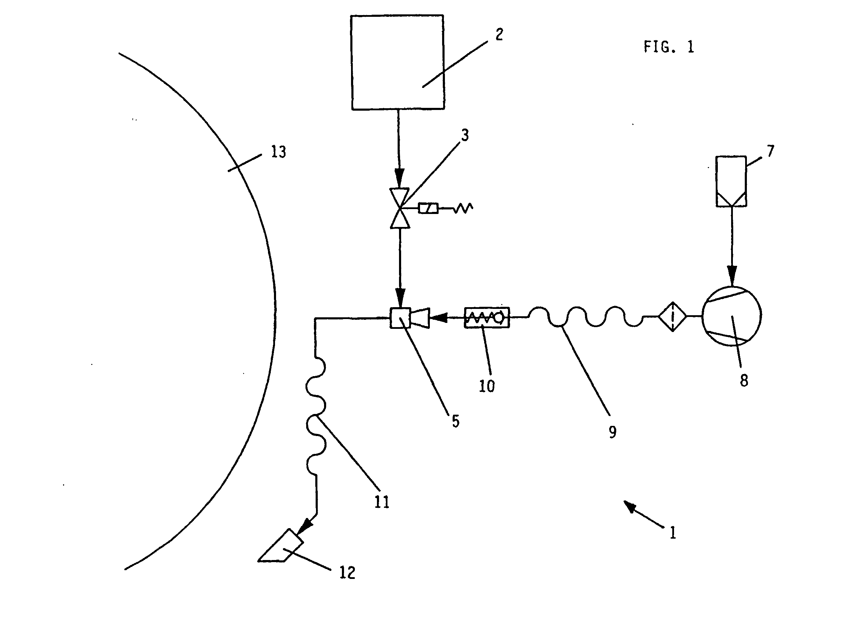

Fig. 1 zeigt schematisch ein Blockschaltbild eines Streugeräts 1 mit einem Vorratsbehälter 2, der mit einer Dosiervorrichtung 3 verbunden ist. Als Dosiervorrichtung 3 ist in dem in Fig. 1 gezeigten Ausführungsbeispiel eine Zellenradschleuse vorgesehen. Mittels der Zellenradschleuse 3 ist es möglich, eine weitgehende Unabhängigkeit der Dosiermenge von der Qualität bzw. der Körnung des im Vorratsbehälter 2 vorgesehenen Sandes zu erreichen.

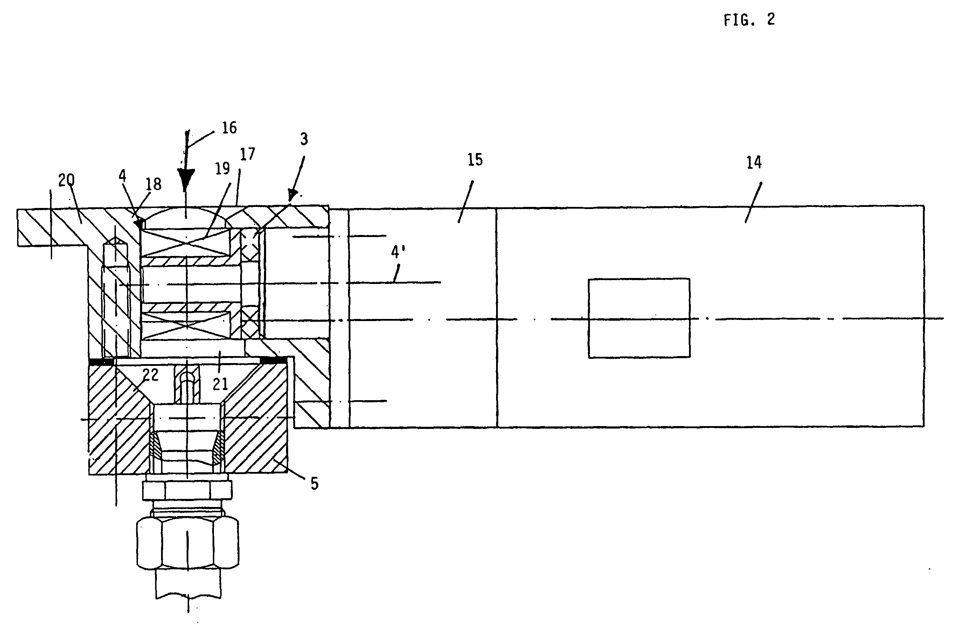

Das in der Zellenradschleuse 3 drehbare Zellenrad 4 (vgl. Fig. 2) dient einerseits als Verschlussorgan zur Unterbrechung des Sandflusses zwischen dem Vorratsbehälter 2 und dem Injektor 5 und andererseits als Fördereinrichtung, um den auszutragenden Sand in die als Injektor 5 ausgeführte druckluftbetätigte Förder- bzw. Austragseinrichtung zu fördern.

Das über die Zellenradschleuse 3 in den Injektor 5 eingebrachte Sandgut wird mittels Druckluftbeaufschlagung über eine Sandschlauchleitung 11 zum Streurohr 12 gefördert, aus welchem es als Antirutschmaterial für ein Rad 13 austritt. Die Druckluftbeaufschlagung erfolgt mittels einem Kompressor 8, der von einem Druckspeicher 7 angespeist wird, und mit dem Injektor 5 über einen Druckluftschlauch 9 verbunden ist.

Wesentlich ist, dass die von der Zellenradschleuse 3 in den Injektor 5 eingebrachte Sandmenge nur von der Drehzahl des Zellenrades 4 und dem Kammervolumen des Zellenrades 4 abhängt und somit eine gegenüber bekannten Streugeräten wesentlich verbesserte Steuerung der Dosierung der auszutragenden Sandmenge erreicht wird.

Das Rückschlagventil 10 dient zum Schutz des Kompressors 8, da bei sogenannten Zweirichtungsfahrzeugen derartige Streugeräte, in Fahrtrichtung gesehen, an beiden Seiten der Räder 13 angebracht sind. Hierbei ergeben sich Staudrücke im Bereich der Förderleitung 11 bei den entgegen der aktuellen Fahrtrichtung angebrachten Streugeräten, welche sich im System in dynamische Drücke umsetzen können und hierdurch eine unerwünschte Rückförderung von Luft in Richtung des Kompressors 8 bewirkt würde. Die rückströmende Luft würde nämlich Feuchtigkeit und Staub bzw. Sandpartikel in das System bringen, wodurch es zu einer Blockade des Streugeräts 1 kommen würde.

Fig. 2 zeigt im Detail eine teilweise aufgebrochene Ansicht der Zellenradschleuse 3 mit einem Gleichstrommotor 14 als Antriebseinheit für die Drehung des Zellenrades 4 um die Drehachse 4'. Für eine zweckmäßige Drehmomentübertragung zwischen dem Gleichstrommotor 14 und dem Zellenrad 4 ist ein Untersetzungsgetriebe 15 zwischengeschaltet. In die Zellenradschleuse 3 tritt in Pfeilrichtung 16 aus dem Vorratsbehälter 2 über die Eingangsöffnung 17 Sand ein. Um ein zuverlässiges Einbringen auch bei schlechter Sandqualität bzw. grober Sandkörnung zu erreichen, weist die Eingangsöffnung 17 einen trichterförmigen Endabschnitt 18 auf.

Das Zellenrad 4 ist mittels Zellenflügel 19 in mehrere sternförmige Kammern unterteilt, welche ebenfalls veränderbar sind, um die dosierte, auszutragende Sandmenge zu bestimmen. Die Flügel 19 des Zellenrades 4, die vorzugsweise aus Kunststoff oder Blech gefertigt sein können, sind flexibel um bei Einschluss von Sand- bzw. Staubpartikel zwischen dem Gehäuse 20 und dem Zellenrad 4, Beschädigungen bzw. ein Verklemmen des Zellenrades 4 zu verhindern.

An die Ausgabeöffnung 21 der Zellenradschleuse 3 schließt der Injektor 5 wiederum über eine trichterförmige Öffnung 22 an.

Um eine stufenlose Sandmengendosierung über das drehzahlregelbare Zellenrad 4 zu erhalten, ist der Gleichstrommotor 14 mit einer elektronischen Drehzahlregelung versehen, bei welcher die Drehzahlregelung vorzugsweise über ein Potentiometer stattfindet.

Es können allerdings auch andere Antriebseinheiten, wie beispielsweise ein Hydromotor oder ein druckluftbetriebener Motor vorgesehen sein, wobei die Steuerung beim Hydromotor über die Flüssigkeitsmenge bzw. beim Druckluftmotor über druckventilgesteuerte Druckluft erreicht werden kann.

Die äußeren Abmessungen der als Dosiervorrichtung vorgesehenen Zellenradschleuse 3 entsprechen jenen der bisher üblichen Kolbendosierer. Das Streugerät 1 weist somit äußere Abmessungen auf, welche mit jenen bisher verwendeter Streugeräte übereinstimmen. Hierdurch wird die Möglichkeit geschaffen, ein erfindungsgemäßes Streugerät 1 anstelle eines herkömmlichen Streugeräts einzubauen und somit mittels des Austausches eine Verbesserung der Sanddosierung zu erlangen.

Im Speziellen wird hierdurch eine Unabhängigkeit von der Körnung des verwendeten Streusandes erlangt, welches von besonderer Bedeutung ist, da Sande mit sehr unterschiedlicher Qualität eingesetzt werden, bei denen der Sanddurchmesser von kleiner 0,5 mm bis zu einem sehr groben Sanddurchmesser von über 8 mm reicht.

Somit kann die Menge an Sandverbrauch gesenkt werden, da bei herkömmlichen Streugeräten hinsichtlich eines sicheren Durchsatzes bei groben Sandkörnungen eine relativ große Mindestbreite des Kolbenspalts vorgesehen ist, und somit eine relativ große Mindestmenge an Sand dosiert und ausgetragen werden muss.

Selbstverständlich können im Rahmen der Erfindung verschiedene konstruktive Abänderungen vorgenommen werden. So besteht die Möglichkeit, an Stelle einer druckluftbetätigten Förder- bzw. Austragseinrichtung eine auf Basis der Schwerkraft arbeitende Förder- bzw. Austragseinrichtung zu wählen. Als solche kann eine Schwerkraftvorrichtung, z.B. ein Fallsandstreuer dienen.

## Patentansprüche

1. Streugerät mit einem Vorratsbehälter, einer Dosiervorrichtung, welche ein Zellenrad mit mehreren Kammern begrenzende, um eine Drehachse rotierbare, zu dieser radial abstehende Flügel aufweist, und einer vorzugsweise druckluftbetätigten Förder- bzw. Austragseinrichtung zum Austragen des Streugutes, **dadurch gekennzeichnet, dass** die Flügel (19) aus flexiblem Material bestehen.

2. Streugerät nach Anspruch 1, **dadurch gekennzeichnet, dass** die das Zellenrad (4) in mehreren Kammern unterteilenden Flügel (19) aus Bürsten bestehen.

3. Streugerät nach Anspruch 1, **dadurch gekennzeichnet, dass** das Zellenrad (4) bzw. die Zellen aus Kunststoff oder Gummi besteht bzw. bestehen.

4. Streugerät nach Anspruch 1, **dadurch gekennzeichnet, dass** das Zellenrad (4) aus Metall, vorzugsweise Blech, besteht.

5. Streugerät nach einem der Ansprüche 1 bis 4, **dadurch gekennzeichnet, dass** das Zellenrad (4) austauschbar ist.

6. Streugerät nach einem der Ansprüche 1 bis 5, **dadurch gekennzeichnet, dass** das Volumen der Zellenrad-Kammern veränderbar ist.

7. Streugerät nach Anspruch einem der Ansprüche 1 bis 6, **dadurch gekennzeichnet, dass** die Drehzahl der zumindest einen Förder- bzw. Verschlussfläche (19) der Dosiervorrichtung (3) stufenlos veränderbar ist.

8. Streugerät nach einem der Ansprüche 1 bis 7, **dadurch gekennzeichnet, dass** zur Steuerung der Drehzahl der Dosiervorrichtung (3) eine Antriebseinheit (14) vorgesehen ist.

9. Streugerät nach Anspruch 8, **dadurch gekennzeichnet, dass** als Antriebseinheit (14) ein Gleichstrommotor mit elektronischer Drehzahlregelung vorgesehen ist.

10. Streugerät nach Anspruch 8 oder 9, **dadurch gekennzeichnet, dass** zwischen der Antriebseinheit (14) und der Dosiervorrichtung (3) ein Untersetzungsgetriebe (15) vorgesehen ist.

11. Streugerät nach einem der Ansprüche 1 bis 10, **dadurch gekennzeichnet, dass** zwischen der druckluftbetätigten Förder- bzw. Austragsvorrichtung (5) und einem für die Druckluftzufuhr vorgesehenen Kompressor (8) ein Rückschlagventil (10) vorgesehen ist.

12. Streugerät nach Anspruch 1, **dadurch gekennzeichnet, dass** die Zellraddosierung als Schwerkraftvorrichtung, z.B. Fallsandstreuer, ausgebildet ist.

## Claims

1. A sprinkling appliance comprising a reservoir, a metering means including a cellular wheel with vanes delimiting several chambers, which vanes are rotatable about an axis of rotation and project radially thereto, and a preferably compressed-air actuated conveying and dispensing means for dispensing the sprinkling material, **characterized in that** the vanes (19) are made of a flexible material.

2. A sprinkling appliance according to claim 1, **characterized in that** the vanes (19) sub-dividing the cellular wheel (4) into several chambers consist of brushes.

3. A sprinkling appliance according to claim 1, **characterized in that** the cellular wheel (4), or the cells, respectively, is (are) made of a synthetic material or of rubber.

4. A sprinkling appliance according to claim 1, **characterized in that** the cellular wheel (4) is made of metal, preferably sheet metal.

5. A sprinkling appliance according to any one of claims 1 to 4, **characterized in that** the cellular wheel (4) is exchangeable.

6. A sprinkling appliance according to any one of claims 1 to 5, **characterized in that** the volume of the cellular wheel chambers is changeable.

7. A sprinkling appliance according to any one of claims 1 to 6, **characterized in that** the number of revolutions of the at least one conveyer and closure surface (19), respectively, of the metering means (3) is infinitely variable.

8. A sprinkling appliance according to any one of claims 1 to 7, **characterized in that** a drive unit (14) is provided for controlling the number of revolutions of the metering means (3).

9. A sprinkling appliance according to claim 8, **characterized in that** a d.c. motor having an electronic number of revolutions-control is provided as drive unit (14).

10. A sprinkling appliance according to claim 8 or 9, **characterized in that** a reducing gear (15) is provided between the drive unit (14) and the metering means (3).

11. A sprinkling appliance according to any one of claims 1 to 10, **characterized in that** a non-return valve (10) is provided between the compressed-air operated conveying and dispensing means (5) and a compressor (8) provided for the compressed air supply.

12. A sprinkling appliance according to claim 1, **characterized in that** the cellular wheel metering means is designed as a gravity-operated device, e.g. a gravity-feed sand sprinkler.

## Revendications

1. Appareil d'épandage avec un réservoir de stockage, un dispositif de dosage comportant une roue cellulaire comprenant des ailettes délimitant plusieurs chambres, tournant autour d'un axe de rotation et positionnées axialement par rapport à celui-ci, et un dispositif de transport et de déversement à commande préférentiellement pneumatique, destiné au déversement du produit d'épandage, **caractérisé en ce que** les ailettes (19) sont fabriquées en un matériau flexible.

2. Appareil d'épandage selon la revendication 1, **caractérisé en ce que** les ailettes (19) subdivisant la roue cellulaire (4) en plusieurs chambres consistent en des brosses.

3. Appareil d'épandage selon la revendication 1, **caractérisé en ce que** la roue cellulaire (4) ou les cellules sont fabriquées en matière synthétique ou en caoutchouc.

4. Appareil d'épandage selon la revendication 1, **caractérisé en ce que** la roue cellulaire (4) est fabriquée en métal, avantageusement en tôle.

5. Appareil d'épandage selon l'une quelconque des revendications 1 à 4, **caractérisé en ce que** la roue cellulaire (4) est interchangeable.

6. Appareil d'épandage selon l'une quelconque des revendications 1 à 5, **caractérisé en ce que** le volume des chambres de la roue cellulaire est modifiable.

7. Appareil d'épandage selon l'une quelconque des revendications 1 à 6,
**caractérisé en ce que** la vitesse d'une surface de transport et de fermeture (19) au moins du dispositif de dosage (3) est modifiable sans gradins.

8. Appareil d'épandage selon l'une quelconque des revendications 1 à 7, **caractérisé en ce qu'**une unité de commande (14) est prévue pour le contrôle de la vitesse du dispositif de dosage (3).

9. Appareil d'épandage selon la revendication 8, **caractérisé en ce qu**'un moteur à courant continu avec régulation électronique de la vitesse est prévu comme unité de commande (14).

10. Appareil d'épandage selon la revendication 8 ou 9, **caractérisé en ce qu**'un démultiplicateur (15) est prévu entre l'unité de commande (14) et le dispositif de dosage (3).

11. Appareil d'épandage selon l'une quelconque des revendications 1 à 10, **caractérisé en ce qu**'un clapet anti-retour (10) est prévu entre le dispositif de transport et de déversement (5) à commande pneumatique et un compresseur (8) prévu pour l'alimentation en air comprimé.

12. Appareil d'épandage selon la revendication 1, **caractérisé en ce que** le dosage par roue cellulaire est réalisé comme un dispositif par gravité, un épandeur de sable à chute libre, par exemple.
